# EUROPEAN PATENT APPLICATION

(11) **EP 4 730 497 A1**
(43) Date of publication of application: **22.04.2026**
(21) Application number: 25209069.1
(22) Date of filing: 16.10.2025
(51) Int. Cl.: H01M 50/147, H01M 50/55, H01M 50/583, H01M 50/591, H01M 50/593

(54) **CAP ASSEMBLY, BATTERY INCLUDING THE CAP ASSEMBLY, AND BATTERY PACK INCLUDING THE CAP ASSEMBLY**

(30) Priority: 16.10.2024 KR 20240140849
(71) Applicant: Samsung SDI Co., Ltd., Yongin-si, Gyeonggi-do 17084 (KR)
(72) Inventor: MOON, Soo Deok, Suwon-si 16678 (KR); HONG, Su Been, Suwon-si 16678 (KR)
(74) Representative: Marks & Clerk LLP

(57) **Abstract**

The present disclosure relates to a cap assembly, a battery including the cap assembly, and a battery pack including the cap assembly. A cap assembly according to one embodiment includes a cap plate coupled to a case to cover an opening in the case, which accommodates an electrode assembly therein, a terminal extending through the cap plate, with a first end portion of is the terminal being electrically connected to an electrode of the electrode assembly and a second end portion of the terminal protruding outside of the case, an insulating member at least a portion of which is disposed between the cap plate and the terminal to electrically insulate the cap plate and the terminal, and a wiring member electrically connecting the cap plate and the terminal.

## Description

### BACKGROUND

### 1. Field of the Disclosure

The present disclosure relates to a cap assembly, a battery that includes the cap assembly, and a battery pack that includes the cap assembly.

### 2. Discussion of Related Art

Unlike primary batteries that cannot be recharged, secondary batteries are capable of being discharged and recharged. Low-capacity secondary batteries are used in small portable electronic devices such as smartphones, feature phones, notebook computers, digital cameras, and camcorders. Large-capacity secondary batteries are widely used as motor driving power sources and power storage batteries in hybrid vehicles, electric vehicles, etc. Such secondary batteries include a positive electrode, a negative electrode, an electrode assembly including the electrodes, a case (or can) that accommodates the electrode assembly, and an electrode terminal connected to the electrode assembly.

As technology advances, more high-capacity secondary batteries are required. Accordingly, a plurality of secondary batteries may be electrically connected and used together. For example, secondary batteries may be applied to an electronic device in the form of a battery module including a plurality of secondary batteries, and/or a battery pack including a plurality of battery modules. That is, a battery pack may be composed of a plurality of secondary batteries. A battery pack may be used in an electronic device requiring high output and/or high capacity, such as an electric vehicle, or the like.

The battery module or battery pack (hereinafter referred to as a "battery pack") has a plurality of secondary batteries arranged in a housing in at least one direction. The plurality of secondary batteries may be disposed adjacent to each other in the housing or may be disposed spaced apart with a predetermined gap between each of the batteries. In such a case, when a short circuit occurs in any one of the secondary batteries, the short circuit may spread to the entire pack, thereby potentially causing a thermal runaway event.

The above-described information is the background of the present disclosure and is only for improving the understanding of the present disclosure, and thus may include information that does not constitute related art.

### SUMMARY OF THE DISCLOSURE

The present disclosure is directed to providing a cap assembly capable of suppressing or preventing a short circuit from spreading to an adjacent secondary battery or the entire battery pack even when a voltage equal to or greater than a reference value is applied to and/or current equal to or greater than a reference value flows to any one secondary battery in the battery pack. The present disclosure is also directed to a battery and a battery pack including the cap assembly.

However, technical problems to be solved by the present disclosure are not limited to the problems described above, and other problems not mentioned can be clearly understood by those skilled in the art from the description provided herein.

According to an embodiment of the present disclosure, there is provided a cap assembly including a cap plate configured to cover an opening in a case of the battery that accommodates an electrode assembly, a terminal extending through the cap plate, a first end portion of the terminal being configured to be electrically connected to an electrode of the electrode assembly and a second end portion of the terminal being configured to protrude to outside of the case, an insulating member at least a portion of which is disposed between the cap plate and the terminal to electrically insulate the cap plate and the terminal, and a wiring member electrically connecting the cap plate and the terminal.

In other words, there may be provided a cap assembly for a battery, comprising a cap plate coupled to a case to cover an opening of the case, which has at least one open surface and accommodates an electrode assembly therein; a terminal passing through the cap plate, one end portion of which is electrically connected to one electrode of the electrode assembly and the other end portion of which protrudes outside the case; an insulating member, at least a portion of which is disposed between the cap plate and the terminal to electrically insulate the cap plate and the terminal; and a wiring member electrically connecting the cap plate and the terminal.

According to one aspect of the embodiment, the wiring member may be a short-circuit propagation prevention member, with a first end portion of the wiring member being coupled to the cap plate and a second end portion of the wiring member being coupled to the terminal. For example, the wiring member may be a fuse component.

In other words, the wiring member may be a short-circuit propagation prevention member, one end portion of which is coupled to the cap plate and the other end portion of which is coupled to the terminal.

According to another aspect of the embodiment, the wiring member may be bonded to a (or one) surface of the insulating member. For example, the insulating member and the wiring member may be made by an insert injection method. In other words, the insulating member to which the wiring member is bonded may be manufactured by an insert injection method. Alternatively, the insulating member may be made by a laser direct structuring method. In other words, the insulating member to which the wiring member is bonded may be manufactured by a laser direct structuring method. Alternatively, the wiring member may be made (or manufactured) using a conductive adhesive applied to the insulating member.

According to still another aspect of embodiment, the terminal may be configured to be connected to a positive electrode of the electrode assembly.

According to one embodiment of the present invention, there is provided a battery including case including an opening; an electrode assembly accommodated in the case; and a cap assembly closing the opening of the case. In addition, the cap assembly includes a cap plate coupled to the case to cover the opening of the case, a terminal extending through the cap plate, a first end portion of the terminal being electrically connected to an electrode of the electrode assembly and a second end portion of the terminal protruding outside of the case, an insulating member at least a portion of which is disposed between the cap plate and the terminal to electrically insulate the cap plate and the terminal, and a wiring member electrically connecting the cap plate and the terminal.

In other words, there may be provided a battery comprising an electrode assembly; a case in which at least one surface is open and the electrode assembly is accommodated therein; and a cap assembly coupled to an opening of the case, wherein the cap assembly includes a cap plate coupled to the case to cover the opening of the case, a terminal passing through the cap plate, one end portion of which is electrically connected to one electrode of the electrode assembly and the other end portion of which protrudes outside the case, an insulating member, at least a portion of which is disposed between the cap plate and the terminal to electrically insulate the cap plate and the terminal, and a wiring member electrically connecting the cap plate and the terminal.

According to one aspect of the embodiment, the wiring member may be a short-circuit propagation prevention member, with a first end portion of the wiring member being coupled to the cap plate and a second end portion of the wiring member being coupled to the terminal.

In other words, the wiring member may be a short-circuit propagation prevention member, one end portion of which is coupled to the cap plate and the other end portion of which is coupled to the terminal.

According to an embodiment of the present disclosure, there is provided a battery pack including a plurality of batteries spaced apart from each other and arranged in at least one direction, a busbar electrically connecting the batteries, and a housing accommodating the batteries and the bus bar therein. In addition, each of the batteries includes an electrode assembly, a case including an opening and the electrode assembly accommodated therein, and a cap assembly closing the opening of the case, the cap assembly includes a cap plate coupled to the case to cover the opening of the case, a terminal extending through the cap plate, a first end portion of is the terminal being electrically connected to an electrode of the electrode assembly and a second end portion of the terminal protruding outside of the case, an insulating member at least a portion of which is disposed between the cap plate and the terminal to electrically insulate the cap plate and the terminal, and a wiring member electrically connecting the cap plate and the terminal.

In other words, there may be provided a battery pack comprising a plurality of batteries spaced apart from each other and arranged in at least one direction; a busbar electrically connecting the plurality of batteries; and a housing accommodating the plurality of batteries and the bus bar therein, wherein each of the plurality of batteries includes an electrode assembly, a case in which at least one surface is open and the electrode assembly is accommodated therein, and a cap assembly coupled to an opening of the case, wherein the cap assembly includes a cap plate coupled to the case to cover the opening of the case, a terminal passing through the cap plate, one end portion of which is electrically connected to one electrode of the electrode assembly and the other end portion of which protrudes outside the case, an insulating member, at least a portion of which is disposed between the cap plate and the terminal to electrically insulate the cap plate and the terminal, and a wiring member electrically connecting the cap plate and the terminal.

According to one aspect of the embodiment, the wiring member may be a short-circuit propagation prevention member, with a first end portion of the wiring member being coupled to the cap plate and a second end portion of the wiring member being coupled to the terminal.

In other words, the wiring member may be a short-circuit propagation prevention member, one end portion of which is coupled to the cap plate and the other end portion of which is coupled to the terminal.

According to another aspect of the embodiment, the battery pack may further include a partition wall member disposed between adjacent batteries among the plurality of batteries to electrically insulate the adjacent batteries from each other.

According to still another aspect of the embodiment, the battery pack may further include a battery management device configured to detect a state of each of the (plurality of) batteries, and the battery management device may be electrically connected to the case of at least one of (or some of) the (plurality of) batteries.

Any of the optional aspects discussed above in relation to one embodiment of the invention may be applied, where appropriate, to another embodiment of the invention.

At least some of the above and other features of the invention are set out in the claims.

### BRIEF DESCRIPTION OF THE DRAWINGS

The drawings attached to the present specification illustrate embodiments of the present disclosure and further describe aspects and features of the present disclosure together with the detailed description of the present disclosure. The present disclosure is not limited to the embodiments depicted in the drawings.
FIG. 1 is a perspective view schematically illustrating a configuration of a battery pack according to an embodiment of the present disclosure;
FIG. 2 is a perspective view schematically illustrating a configuration of a battery included in the battery pack of FIG. 1;
FIG. 3 is an exploded perspective view schematically illustrating a configuration of a cap assembly included in the battery of FIG. 2;
FIG. 4 is a perspective view schematically illustrating an example of a wiring member;
FIG. 5 is an exploded perspective view illustrating a schematic configuration of a battery according to another embodiment of the present disclosure;
FIG. 6 is a diagram illustrating an equivalent circuit of a battery according to an embodiment of the present disclosure;
FIG. 7A is a diagram illustrating an equivalent circuit of a battery pack including eight batteries according to an embodiment of the present disclosure;
FIG. 7B is an equivalent circuit diagram illustrating a mechanism for preventing short circuit propagation in a battery pack when a short-circuit phenomenon occurs between adjacent batteries;
FIG. 7C is an equivalent circuit diagram illustrating a mechanism for preventing short circuit propagation in a battery pack when a short circuit occurs between a case of a battery and a pack housing;
FIG. 8A is a diagram schematically illustrating a configuration for measuring a voltage in a battery pack including a conventional battery; and
FIG. 8B is a diagram schematically illustrating a configuration for measuring a voltage in a battery pack including the battery according to embodiments of the present disclosure.

### DETAILED DESCRIPTION OF EMBODIMENTS

Hereinafter, embodiments of the present disclosure will be described in detail with reference to the accompanying drawings. The terms or words used in the present specification and claims are not to be interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

Furthermore, when used herein, the terms "comprise or include" and/or "comprising or including" specify the presence of the mentioned shapes, numbers, steps, operations, members, elements, and/or groups thereof and are not intended to exclude the presence or addition of one or more other shapes, numbers, operations, members, elements, and/or groups thereof.

In addition, in order to help understand the disclosure, the attached drawings are not drawn to actual scale, and the dimensions of some components may be exaggerated. In addition, the same reference numbers are assigned to the same components in different embodiments.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Although first, second, and the like are used to describe various components, the components are not limited by these terms. These terms are used only to distinguish one component from another, and unless otherwise specifically stated, it is to be understood that a first component may also be a second component.

Throughout the specification, unless otherwise specifically stated, each element may be singular or plural.

When any component is disposed "on (or under)" a component or "above (or below)" a component, it may mean not only that any component is disposed in contact with the component, but also that another component may be interposed between the component and any component disposed on (or under) the component.

In addition, when a component is described as being "on," "connected to," or "coupled to" another component, the above components may be directly connected or coupled to each other, but it should be understood that other components may be "interposed" between each component, or each component may be "connected," "coupled," or "linked" through another component.

As used herein, the term "and/or" includes any and all combinations of one or more of the associated listed items. Further, the use of "may" when describing embodiments of the present disclosure relates to "one or more embodiments of the present disclosure." Expressions such as "one or more" and "one or more" before the list of elements modify the entire list of elements and do not modify individual elements in the list.

Throughout the specification, when "A and/or B" is stated, it means A, B, or A and B, unless otherwise stated. That is, "and/or" includes any or all combinations of the plurality of items enumerated. When "C to D" is stated, it means C or more and D or less, unless otherwise specified.

When phrases such as "at least one of A, B and C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

The term "use" may be considered synonymous with the term "utilize." As used herein, the terms "substantially," "about," and similar terms are used as terms of approximation, not as terms of degree, and are intended to take into account inherent variations in measured or calculated values that would be recognized by a person of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to limit the present disclosure.

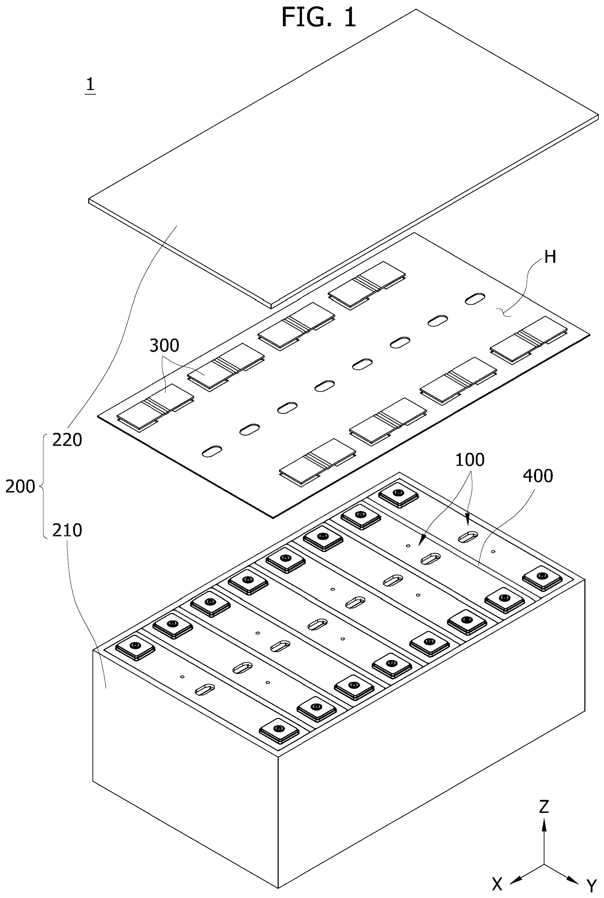

FIG. 1 is a perspective view schematically illustrating a configuration of a battery pack according to an embodiment of the present disclosure. Referring to FIG. 1, a battery pack 1 includes a battery 100, a pack housing 200, a busbar 300, and a partition wall member 400.

The battery 100 may include a plurality of batteries within the pack housing 200. The plurality of batteries 100 may be arranged in a row in either a longitudinal direction or a width direction of the pack housing 200. Although FIG. 1 illustrates as an example wherein eight batteries 100 are arranged in a longitudinal direction (X-axis direction) of the pack housing 200, the arrangement of the plurality of batteries 100 is not limited thereto and may be designed to have various arrangements. For example, the plurality of batteries 100 may be arranged in a Y-axis direction, two or more batteries among the plurality of batteries 100 arranged in a row in the X-axis direction may be arranged in the Y-axis direction, or two or more batteries among the plurality of batteries 100 arranged in a row in the Y-axis direction may be arranged in the X-axis direction. Alternatively, two or more batteries among the plurality of batteries 100 arranged in a row in the X-axis direction and/or the Y-axis direction may be stacked and arranged in a Z-axis direction.

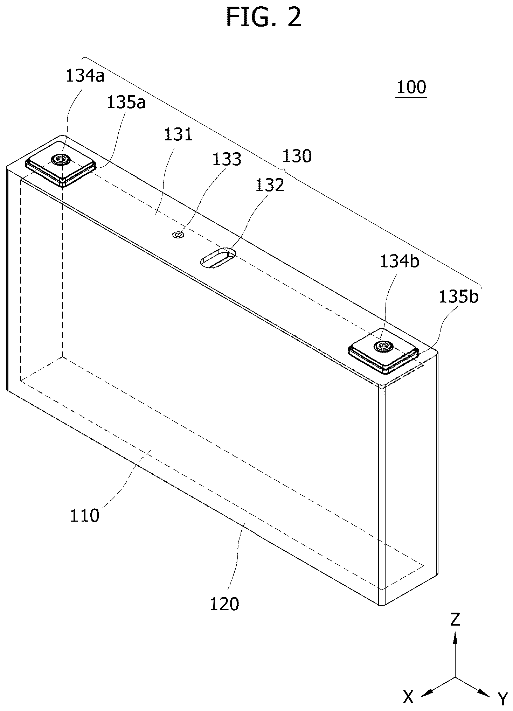

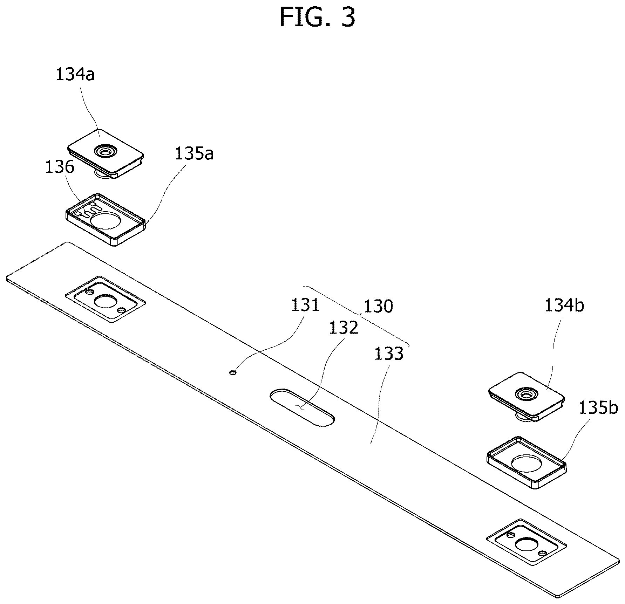

FIG. 2 is a perspective view schematically illustrating a configuration of the battery 100 included in the battery pack 1 of FIG. 1. FIG. 3 is an exploded perspective view schematically illustrating a configuration of a cap assembly 130 included in the battery 100 of FIG. 2. The battery 100 illustrated in FIGS. 2 and 3 is a prismatic type lithium-ion secondary battery. However, the battery 100 is not limited to a prismatic type as illustrated in FIGS. 2 and 3 and may configured as prismatic secondary batteries of other types or having other structures. In addition, the battery 100 is not necessarily limited to the prismatic type, but rather may be a pouch-type or a cylindrical battery.

Referring to FIGS. 2 and 3, the battery 100 includes an electrode assembly 110, a case 120 that accommodates the electrode assembly 110, and the cap assembly 130 coupled to the case 120 so as to close an opening in the case 120.

The electrode assembly 110 includes a positive electrode, a negative electrode, and a separator interposed between the positive electrode and the negative electrode. The positive electrode and the negative electrode may generally have a polygonal sheet shape, and a plurality of positive electrodes and negative electrodes may be alternately stacked with separator(s), which is an insulator, therebetween. However, the present disclosure is not limited to such a configuration, and the positive and negative electrodes having a predetermined length may be wound after interposing the separator.

### Positive electrode

The positive electrode for the battery 100 may include a current collector and a positive electrode active material layer formed on the current collector. The positive electrode active material layer may include a positive electrode active material and may further include a binder and/or a conductive material. In addition, the positive electrode may further include an additive that functions as a sacrificial positive electrode.

As the positive electrode active material, a compound capable of reversible intercalation and deintercalation of lithium (lithiated intercalation compound) may be used. Specifically, one or more of a composite oxide of lithium and a metal selected from cobalt, manganese, nickel, and combinations thereof may be used.

The composite oxide may be a lithium transition metal composite oxide, for example, a lithium nickel-based oxide, a lithium cobalt-based oxide, a lithium manganese-based oxide, a lithium iron phosphate-based compound, a cobalt-free nickel-manganese-based oxide, and combinations thereof. As examples, a compound represented by any one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}G_{c}O₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). In these chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al or a combination thereof.

In some examples, the positive electrode active material may be a high nickel-based positive electrode active material having a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. The high nickel-based positive electrode active material may provide high capacity, and, thus, may be used in high-capacity, high-density secondary batteries.

The amount of the positive electrode active material may be 90 wt% to 99.5 wt% based on 100 wt% of the positive electrode active material layer. The amount of each of the binder and the conductive material may be 0.5 wt% to 5 wt%, based on 100 wt% of the positive electrode active material layer.

The binder serves to attach the positive electrode active material particles to each other, and also attach the positive electrode active material to the current collector. Representative examples of the binder include polyvinyl alcohol, carboxymethylcellulose, hydroxypropylcellulose, diacetylcellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, and the like. But the present disclosure is not limited to these examples.

The conductive material is used to impart conductivity to the electrode, and any material that does not cause a chemical change and is electronically conductive may be used in the constructed battery. Examples of the conductive material include a carbon-based material such as natural graphite, artificial graphite, carbon black, acetylene black, Ketjen black, carbon fibers, carbon nanofibers, and carbon nanotubes; a metal-based material in the form of a metal powder or metal fibers containing copper, nickel, aluminum, silver, etc.; a conductive polymer such as a polyphenylene derivative; and a mixture thereof.

Aluminum may be used as the current collector, but the current collector is not limited thereto.

### Negative electrode

The negative electrode for the battery 100 includes a current collector and a negative electrode active material layer located on the current collector. The negative electrode active material layer may further include a binder and/or a conductive material. For example, the negative electrode active material layer may include 90 wt% to 99 wt% of the negative electrode active material, 0.5 wt% to 5 wt% of the binder, and 0 wt% to 5 wt% of the conductive material.

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite such as amorphous, plate-like, flaky, spherical, or fibrous natural graphite or artificial graphite, and examples of the amorphous carbon may include soft carbon or hard carbon, mesophase pitch carbide, calcined coke, and the like.

As the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or Sn-based negative electrode active material may be used. The Si-based negative electrode active material may include silicon, a silicon-carbon composite, SiOₓ (0 < x < 2), a Si-Q alloy or combinations thereof. The Sn-based negative electrode active material may include Sn, SnO₂, a Sn-based alloy, or a combination thereof. In the formula Si-Q, Q is selected from alkali metals, alkaline earth metals, group 13 elements, group 14 elements (excluding Si), group 15 elements, group 16 elements, transition metals, rare earth elements, and combinations thereof.

The silicon-carbon composite may be a composite of silicon and amorphous carbon. According to an embodiment, the silicon-carbon composite may be in the form of silicon particles with amorphous carbon coated on the surfaces of the silicon particles. For example, the silicon-carbon composite may include a secondary particle (core) in which silicon primary particles are assembled and an amorphous carbon coating layer (shell) located on the surface of the secondary particle. The amorphous carbon may also be located between the silicon primary particles, for example, the silicon primary particles may be coated with the amorphous carbon. The secondary particles may be dispersed in an amorphous carbon matrix.

The silicon-carbon composite may further include crystalline carbon. The silicon-carbon composite may include, for example, a core including crystalline carbon and silicon particles and an amorphous carbon coating layer located on a surface of the core.

The Si-based negative electrode active material or the Sn-based negative electrode active material may be used in combination with the carbon-based negative electrode active material.

The binder serves to attach the negative electrode active material particles to each other, and also attach the negative electrode active material to the current collector. As the binder, a non-aqueous binder, an aqueous binder, a dry binder, or a combination thereof may be used.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polypichlorohydrin, polyphosphazene, poly(metha)acrylonitrile, an ethylene propylene diene copolymer, polyvinylpyridine, chlorosulfonated polyethylene, latex, a polyester resin, a (metha)acrylic resin, a phenolic resin, an epoxy resin, polyvinyl alcohol, and a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, and an alkali metal salt thereof may be mixed and used. As the alkali metal, Na, K, or Li may be used.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The conductive material is used to impart conductivity to the electrode, and any material that does not cause a chemical change and is electronically conductive may be used in the constructed battery. Examples of the conductive material include a carbon-based material such as natural graphite, artificial graphite, carbon black, acetylene black, Ketjen black, carbon fibers, carbon nanofibers, and carbon nanotubes; a metal-based material in the form of a metal powder or metal fibers containing copper, nickel, aluminum, silver, etc.; a conductive polymer such as a polyphenylene derivative; and a mixture thereof.

The negative electrode current collector may be selected from copper foil, nickel foil, stainless steel foil, titanium foil, nickel foam, copper foam, a polymer substrate coated with a conductive metal, and a combination thereof.

### Electrolyte

The electrolyte for the battery 100 includes a non-aqueous organic solvent and a lithium salt.

The non-aqueous organic solvent functions as a medium through which ions involved in the battery's electrochemical reaction move.

The non-aqueous organic solvent may be a carbonate-based, ester-based, ether-based, ketone-based, or alcohol-based solvent, an aprotic solvent, or a combination thereof.

Examples of the carbonate-based solvent that may be used, include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), etc.

Examples of the ester-based solvent that may be used, include methyl acetate, ethyl acetate, n-propyl acetate, dimethyl acetate, methyl propionate, ethyl propionate, decanolide, mevalonolactone, valerolactone, etc.

Examples of the ether-based solvent that may be used, include dibutyl ether, tetraglyme, diglyme, dimethoxyethane, 2-methyltetrahydrofuran, 2,5-dimethyltetrahydrofuran, and tetrahydrofuran. In addition, cyclohexanone and the like may be used as the ketone-based solvent. As the alcohol-based solvent, ethyl alcohol, isopropyl alcohol, and the like may be used, and as the aprotic solvent, nitriles such as R-CN (where R is a straight, branched, or cyclic hydrocarbon group having 2 to 20 carbon atoms, and may include a double bond, an aromatic ring, or an ether group); amides, such as dimethylformamide; dioxolanes, such as 1,3-dioxolane, 1,4-dioxolane, and the like; and sulfolanes may be used.

The non-aqueous organic solvent may be used alone or in combination of two or more.

In addition, when the carbonate-based solvent is used, a cyclic carbonate and chain carbonate may be mixed and used, and the cyclic carbonate and the chain carbonate may be mixed in a volume ratio of 1:1 to 1:9.

The lithium salt is a material that is dissolved in an organic solvent and acts as a source of lithium ions in the battery, enabling the basic operation of the secondary battery. The lithium salt promotes the movement of lithium ions between the positive electrode and the negative electrode. Representative examples of the lithium salt may include one or more of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

### Separator

The battery 100 may have a separator between the positive electrode and the negative electrode. As the separator, polyethylene, polypropylene, polyvinylidene fluoride, or a multilayer of two or more thereof may be used Also, a mixed multilayer such as a polyethylene/polypropylene two-layer separator, a polyethylene/polypropylene/polyethylene three-layer separator, and a polypropylene/polyethylene/polypropylene three-layer separator, etc. may be used. The separator may include a porous substrate and a coating layer including an organic material, an inorganic material, or a combination thereof located on one or both surfaces of the porous substrate.

The porous substrate may be a polymer film formed of polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, TEFLON^{®}, and polytetrafluoroethylene, or a copolymer or mixture of two or more thereof.

The organic material may include a polyvinylidene fluoride-based polymer or a (meth)acrylic-based polymer. The inorganic material may include, but is not limited thereto, inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. The organic material and the inorganic material may be present as a mixture in a single coating layer or may be present in a form of a coating layer in which an organic material and an inorganic material are stacked.

The case 120 forms the exterior of the battery 100 and may be formed of a conductive metal such as aluminum, an aluminum alloy, or nickel-plated steel. The case 120 provides a space in which the electrode assembly 110 is accommodated.

In the prismatic battery 100, the case 120 has a roughly rectangular parallelepiped shape. The case 120 may include, for example, a front plate and a rear plate facing in the X-axis direction, a left side plate and a right side plate facing in the Y-axis direction, and a bottom plate facing in the Z-axis direction. Also, an upper surface facing in the Z-axis direction may be open. The cap assembly 130 is disposed on the open upper surface of the case 120. The front plate, the rear plate, the left side plate, the right side plate, and the bottom plate may each be formed as separate plate-shaped members and may be joined at connecting portions. However, the present disclosure is not limited thereto, and two or more plates may be formed by bending one large-area plate 90 degrees.

The cap assembly 130 may include a cap plate 131 covering the opening, that is, the upper surface of the case 120. The cap plate 131 may be made of a thin plate. The cap plate 131 may be made of a conductive material, such as copper, nickel, aluminum, or the like. An insulating member may be installed between the cap plate 131 and the electrode assembly 110. The cap plate 131 may be coupled to the opening of the case 120 by various types of coupling methods, such as welding, bolting, fitting, etc.

A vent 132 may be formed in the cap plate 131. For example, a vent hole may be formed in the cap plate 131. The vent 132 may be opened and closed in response to changes in the internal pressure of the case 120. That is, the vent 132 may be closed during normal operation of the battery 100 to prevent the electrolyte or the like inside the case 120 from leaking out and to prevent moisture, foreign substances, or the like from entering the inside of the case 120. On the other hand, the vent 132 may open during, for example, a thermal runaway of the battery 100 to allow flames, gas, smoke, and the like generated inside the case 120 to be discharged to outside of the case 120.

An electrolyte inlet 133 may also be formed in the cap plate 131, and the electrolyte may be injected into the case 120 through the electrolyte inlet 133. The electrolyte inlet 133 may be sealed using a sealing cap after the electrolyte is injected. The electrolyte inlet 133 may be disposed a predetermined distance from the vent 132.

The cap assembly 130 may include a pair of terminals 134a and 134b. To this end, through holes through which the terminal 134a and the terminal 134b may pass may be formed in the cap plate 131. Inner end portions of the terminals 134a and 134b that pass through the cap plate 131 may be electrically connected to the positive electrode and the negative electrode of the electrode assembly 110, and outer end portions of the terminals 134a and 134b may protrude outward from the cap plate 131, e.g., protrude to outside of the case 120. The terminals 134a and 134b may function as positive electrode and negative electrode terminals of the battery 100.

In an example, each of the terminals 134a and 134b may be electrically connected to a positive electrode current collector or a negative electrode current collector that are welded to stacked positive uncoated portions or negative uncoated portions. In such a case, each of the terminals 134a and 134b may be welded to face an upper surface of the positive electrode current collector or the negative electrode current collector through a lower surface thereof.

An outer peripheral surface of each of the outer end portions of the terminals 134a and 134b may be threaded and may be fixed to the cap plate 131 with a nut. However, the present disclosure is not limited thereto, and the terminals 134a and134b may have a rivet structure and may be riveted to the cap plate 131 or may be directly welded to the cap plate 131.

The cap assembly 130 may include insulating members 135a and 135b disposed between the cap plate 131 and the terminals 134a and 134b. Each of the insulating members 135a and 135b may be fixed between the cap plate 131 and the terminals 134a and 134b by press-fitting, injection molding, adhesion, or the like. The insulating members 135a and 135b block an electrical connection between the cap plate 131 and the terminals 134a and 134b. In addition, by blocking the physical contact between the cap plate 131 and the terminals 134a and 134b, the insulating members 135a and 135b prevent moisture or foreign substances from entering the space between the cap plate 131 and the terminals 134a and 134b.

The insulating members 135a and 135b may have a predetermined thickness with a material having insulating properties, and there is no particular limitation on the type or thickness thereof. According to embodiments, the insulating members 135a and 135b may be formed of a material having high resistance characteristics, such as an insulating plastic such as polyethylene (PE), polypropylene (PP), or the like, an insulating rubber such as polyethylene terephthalate (PET) rubber, or the like, an insulating ceramic, or the like.

According to embodiments, the cap assembly 130 may further include a wiring member 136. The wiring member 136 is for electrically connecting the cap plate 131 and the terminal 134a, with one end portion of the wiring member 136 being electrically connected to the cap plate 131 and the other end portion of the wiring member 136 being electrically connected to the terminal 134a. Accordingly, the wiring member 136 may electrically connect the cap plate 131 and the case 120 coupled thereto to one of the electrodes (e.g., a positive electrode) of the secondary battery 100 through the positive electrode terminal 134a. In such a case, the wiring member 136 may not be installed between the cap plate 131 and the negative electrode terminal 134b. But, in other embodiments, the wiring member 136 may be provided between the cap plate 131 and the negative electrode terminal 134b and not between the cap plate 131 and the positive electrode terminal 134a.

Accordingly, the wiring member 136, the cap plate 131 and the case 120 are electrically connected to the positive electrode of the battery 100. Therefore, since the cap plate 131 and the case 120 are electrically connected to the positive electrode of the battery 100 when the battery 100 operates, current flows through the cap plate 131 and the case 120 such that corrosion of the cap plate 131 and the case 120 by electrolytes or moisture or the like may be suppressed. Additionally, when measuring the voltage of the battery 100, a measurement terminal does not necessarily need to be electrically connected to the terminal 134a and instead may be electrically connected to the case 120. Therefore, a limitation on the installation of a circuit for measuring the voltage of the battery 100 may be alleviated, which will be described below.

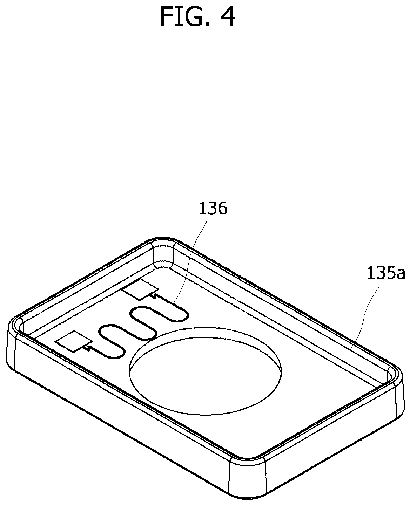

FIG. 4 is a perspective view schematically illustrating an example of the wiring member 136. According to an embodiment, the wiring member 136 may be a short-circuit propagation prevention member that blocks the flow of current under certain conditions in the manner of a fuse. For example, the wiring member 136 may be configured to cut off the flow of current when the voltage at both ends becomes more than a reference voltage, or when there is a current higher than the reference current. However, the type of wiring member 136 is not limited, and there is no particular limitation on the type as long as it blocks the flow of current when a voltage above the reference value is applied or when current is above the reference value. In addition, there is no particular limitation on the material of the wiring member 136, and the wiring member 136 may be formed of copper, zinc, an aluminum alloy, or the like.

The wiring member 136 may be disposed between the cap plate 131 and the terminal 134a and may be coupled to the insulating member 135a. In this case, when one end of the wiring member 136 is electrically connected to the cap plate 131 and the other end is electrically connected to the terminal 134a, there is no particular limitation on the type, arrangement position, and manufacturing method of the wiring member 136. For example, the wiring member 136 may be a fuse component coupled to the insulating member 135a, as illustrated in FIG. 4. In this case, the insulating member 135a including the wiring member 136 may be manufactured by an insert injection method such as plastic insert injection method, but the present disclosure is not limited thereto. It will be apparent to those skilled in the art that the arrangement position of the wiring member 136 illustrated in FIG. 4 is merely an example. As another example, the wiring member 136 may be imprinted on the insulating member 135a by a laser direct structuring (LDS) method. That is, a predetermined pattern may be made on the insulating member 135a using a laser, and the wiring member 136 may be made by coating the pattern with a conductive metal or the like. As still another example, the wiring member 136 may be formed using a conductive bond (or electrically conductive adhesive). That is, the wiring member 136 may be formed by providing a fuse pattern on the insulating member 135a with a conductive bond and then curing the fuse pattern.

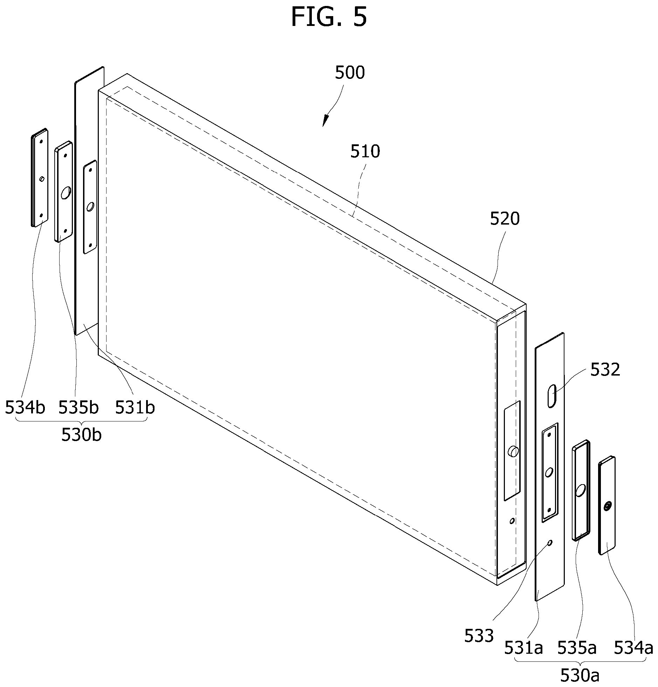

FIG. 5 is an exploded perspective view illustrating a schematic configuration of a battery according to another embodiment of the present disclosure. Referring to FIG. 5, a battery 500 includes an electrode assembly 510, a case 520 that accommodates the electrode assembly 510 and has openings on left and right sides, and a pair of cap assemblies 530a and 530b that are respectively coupled to the sides of the case 520 to close the openings.

The battery 500 of FIG. 5 differs from the battery 100 of FIG. 2 in that electrode terminals 534a and 534b are disposed on both sides of the case 520. Accordingly, the arrangement of the electrode current collectors in the electrode assembly 510 is also different from the electrode assembly 110 of FIG. 2, and the position and number of openings in the case 520 and the case 120 of FIG. 2 may be different. Hereinafter, the cap assemblies 530a and 530b will be described mainly focusing on the difference from the cap assembly 130 of the battery 100 of FIG. 2. The parts not specifically described herein may be the same as those described above with reference to FIGS. 2 and 3, or may be modified to correspond to the differences.

The cap assembly may include a pair of cap assemblies, that is, a right cap assembly 530a and a left cap assembly 530b. The right cap assembly 530a may include a right cap plate 531a covering a right side surface opening, that is, the right side surface of the case 520. The left cap assembly 530b may include a left cap plate 531b covering a left side surface opening, that is, the left side surface of the case 520. An insulating member may be installed between each of the right and left cap plates 531a and 532b and the electrode assembly 510.

The right cap plate 531a may be provided with a vent 532. In addition, the right cap plate 531a may also have an electrolyte inlet 533 formed therein. However, this is an example, and both the vent 532 and the electrolyte inlet 533 may be provided in the left cap plate 531b, or one of the vent 532 and the electrolyte inlet 533 may be provided in the right cap plate 531a and the other may be provided in the left cap plate 531b.

The right cap assembly 530a and the left cap assembly 530b may each have one terminal 534a or 534b. For example, the right and left cap plates 531a and 531b may each have a through hole through which the terminals 534a and 534b may pass. In particular, an inner end portion of the terminal 534a passing through the through hole in the right cap plate 531a may be electrically connected to a positive electrode of the electrode assembly 510, and the terminal 534b passing through the through hole in the left cap plate 531b may be electrically connected to a negative electrode of the electrode assembly. In such a case, the right terminal 534a may function as the positive electrode of the battery 500, and the left terminal 534b may function as the negative electrode of the battery 500. Alternatively, the battery 500 may be configured such that the right terminal 534a functions as the negative electrode of the battery 500, and the left terminal 534b functions as the positive electrode of the battery 500.

The cap assemblies 530a and 530b may include insulating members 535a and 535b disposed between the right and left cap plates 531a and 531b and the positive and negative electrode terminals 534a and 534b. In addition, the cap assemblies 530a may further include a wiring member (not shown) electrically connecting the right cap plate 531a and the positive electrode terminal 534a. In such a case, the wiring member may be disposed between the right cap plate 531a and the positive electrode terminal 534a.

Referring again to FIG. 1, the pack housing 200 may form an exterior of the battery pack 1 and may provide a space in which a plurality of batteries 100 may be accommodated. The pack housing 200 according to the present embodiment may include a housing body 210 and a cover 220.

The housing body 210 may be formed to have a shape of a box with an empty interior and one open side. The cross-sectional shape of the housing body 210 in the XY plane is not limited to a rectangle and may be formed to have various shapes such as polygonal, circular, oval, or other shapes.

The cover 220 may be coupled to the housing body 210 and may close the internal space of the housing body 210. In one example, the cover 220 may be formed to have a substantially plate shape and may be disposed facing the open side of the housing body 210. The cover 220 may be fixed to the housing body 210 by various types of coupling methods, such as bolting, welding, or fitting.

The busbar 300 electrically connects the plurality of batteries 100. The busbar 300 may be disposed between the cover 220 and the battery 100. In some embodiments, the busbar 300 may be provided as a plurality of busbars. Each busbar 300 may connect two or more adjacent batteries 100 in series or parallel. In one example, both sides of the busbar 300 may be respectively connected to the positive electrode terminal 134a of one of a pair of adjacent batteries 100 and the negative electrode terminal 134b of the other of the pair of adjacent batteries 100. Accordingly, the plurality of batteries 100 may be connected in series by the busbar 300. However, the busbar 300 is not limited to this form of connection and both sides of the busbar 300 may be connected to the negative electrode terminal 134b of one of the pair of adjacent batteries 100 and the positive electrode terminal 134a of the other, or may be respectively connected to a positive terminal or negative terminal of one of the pair of adjacent batteries 100 and the positive terminal or negative terminal of the other of the pair of adjacent batteries 100 to connect the plurality of batteries 100 in parallel.

The busbar 300 may be formed of an electrically conductive material, such as copper, aluminum, nickel, or the like. A specific shape of the busbar 300 is not limited to that illustrated in FIG. 1. Rather, the busbar 300 may be designed to have various shapes capable of connecting adjacent batteries 100.

A plurality of busbars 300 may be supported inside the housing body 210 by a busbar holder H. The busbar holder H may be formed to have, for example, a flat plate shape. The busbar holder H may be disposed between the cover 220 and the battery 100. The busbar 300 may be fixed to the busbar holder H by various types of coupling methods, such as fitting, bolting, injection molding, and the like. The busbar holder H may be configured to include an electrically insulating polymer compound material.

Partition wall members 400 are positioned in gaps between adjacent batteries 100 that are spaced apart by a predetermined distance in one direction. For example, as illustrated in FIG. 1, when the front plate of the case 120 of one battery 100 and the facing rear plate of the case 120 of the other battery 100 are disposed with a gap therebetween, the partition wall members 400 may be positioned in the gap between the front plate and the rear plate.

If a thermal runaway event occurs in the battery 100, the partition wall members 400 function to prevent thermal runaway from spreading to adjacent batteries 100. To this end, the partition wall members 400 may be formed of a material having a higher melting point than a material of the case 120 or other parts of the battery 100. In example embodiments, the partition wall members 400 may include a metal material having a higher melting point than aluminum (Al) and/or a member formed of an insulating material, such as a ceramic, etc.

The partition wall members 400 may also physically absorb an increase in the size of the battery 100 if the battery 100 swells to prevent damage to the battery pack 1. More specifically, when the battery 100 does not swell, the partition wall member 400 does not change in size (hereinafter referred to as "thickness") in the X-axis direction. On the other hand, if the battery 100 swells, the thickness of the partition wall member 400 may be reduced. Accordingly, even when the battery 100 swells, the overall size (in particular, the length in the X-axis direction) of the battery pack 1 is maintained so that damage to the cap plate 131, the housing body 210, or the like may be prevented.

Although not illustrated in FIG. 1, one or more insulating members may be disposed between the battery 100 and an outer surface plate of the housing body 210. More specifically, among the plurality of batteries 100 arranged in one direction, the insulating member may be disposed between the batteries 100 disposed at both ends and the surfaces of the housing body 210 adjacent to the end batteries 100. To this end, the plurality of batteries 100 may be disposed within the housing body 210 so that there is a predetermined gap between the battery 100 and a surface of the housing body 210. The case 120 of the battery 100 and the housing body 210 then may be electrically insulated from each other by the insulating member. The insulating member may be formed of a material having an electrically insulating characteristic and a high melting point, for example, an insulating ceramic or the like. But the present disclosure is not limited in this regard.

Although not illustrated in FIG. 1, the battery pack 1 may include a battery management system (BMS) for managing the battery 100 and the battery pack 1. The BMS may include a detection device, a balancing device, and a control device.

The detection device may detect a state (e.g, voltage, current, temperature, etc.) of the battery pack 1, and may detect information indicating the state of the battery pack 1. The detection device may detect a voltage of each of the batteries constituting the battery pack 1. The detection device may also detect a current flowing through each of the batteries 100 constituting the battery pack 1. The detection device may detect an ambient temperature in at least one part of the battery 100 and/or the battery pack 1.

The balancing device may perform a balancing operation of the secondary batteries 100 in the battery pack 1. The control device may monitor and calculate a state (e.g, voltage, current, temperature, state of charge SOC, life (state of health (SOH), etc.) of the battery pack 1 based on the state information (e.g, voltage, current, temperature, etc.) of the battery pack 1 received from the detection device. In addition, the control device may also perform control functions (e.g., temperature control, balancing control, charge/discharge control, etc.), protection functions (e.g., overdischarge protection, overcharge protection, overcurrent protection, short circuit protection, fire extinguishing, etc.), etc. based on the status monitoring results. Further, the control device may perform wired or wireless communication functions with an external device (e.g., a higher controller, a vehicle, a charger, a PCS, etc.) of the battery pack 1.

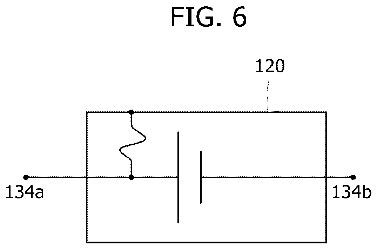

FIG. 6 is a diagram illustrating a circuit that is equivalent to a battery according to an embodiment of the present disclosure.

Referring to FIG. 6, the battery has a positive electrode electrically connected to the positive electrode terminal 134a, and a negative electrode electrically connected to the negative electrode terminal 134b. In addition, the case 120 of the battery is electrically connected to the positive electrode and the positive electrode terminal 134a through the wiring member 136 that functions to prevent a short circuit (as described above). According to this circuit configuration, when an overcurrent flows through the case 120, the overcurrent also flows through the wiring member 136, and as a result, the short-circuit prevention function of the wiring member 136 may be activated (e.g., a fuse that is the wiring member 136 is blown), thereby blocking the electric flow between the case 120 and the positive electrode terminal 134a.

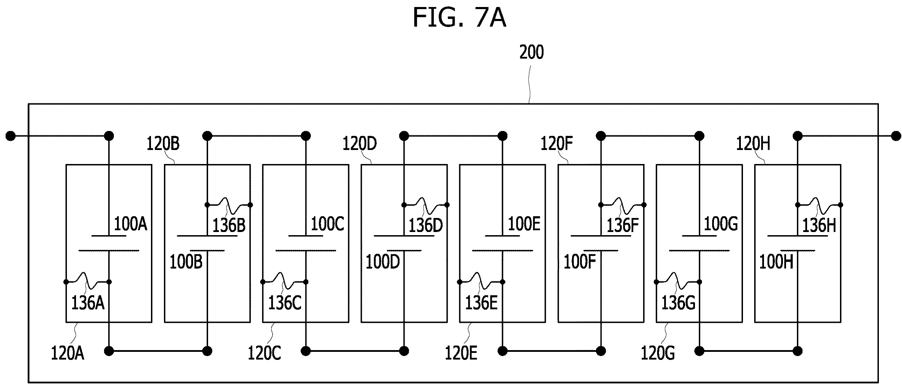

FIG. 7A is a diagram illustrating a circuit equivalent to a battery pack including eight batteries according to an embodiment of the present disclosure. The battery pack having the equivalent circuit illustrated in FIG. 7A may be the battery pack illustrated in FIG. 1.

Referring to FIG. 7A, in the equivalent circuit of the battery pack, eight batteries 100A to 100H may be connected in series with each other through a busbar 300. In addition, as described above, a case 120A to 120H of each of the eight batteries 100A to 100H is electrically connected to a positive electrode of each of the batteries 100A to 100H through protective wiring members 136A to 136H.

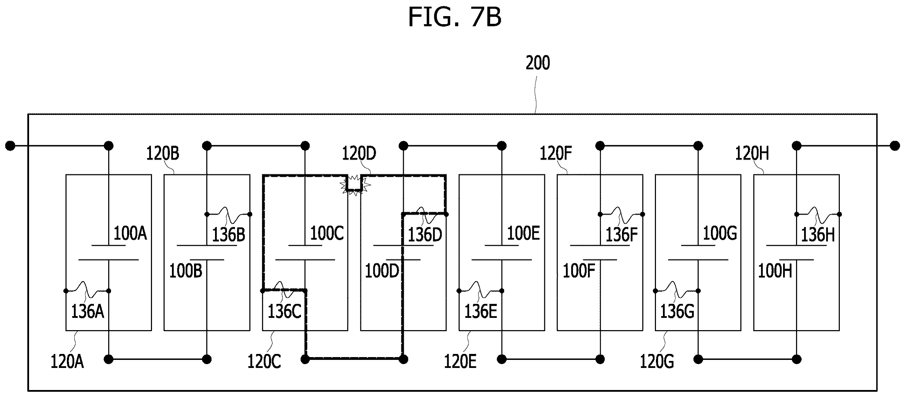

FIG. 7B is an equivalent circuit diagram illustrating a mechanism for preventing short circuit propagation in the battery pack when a short circuit phenomenon occurs between adjacent batteries. FIG. 7B is a case where a third battery 100C and a fourth battery 100D are short-circuited to each other.

Referring to FIG. 7B, when the third battery 100C and the fourth battery 100D are short-circuited to each other, an overcurrent flow (indicated by the dashed line) through the case 120C of the third battery 100C and the case 120D of the fourth battery 100D. As a result, the overcurrent flows through the wiring member 136C of the third battery 100C and the wiring member 136D of the fourth battery 100D, and at least one of the wiring members 136C and 136D may be disconnected to block the overcurrent flowing through the cases 120C and 120D. Therefore, it is possible to prevent or suppress a short circuit event from spreading to the other batteries 100A, 100B, and 100E in the battery pack.

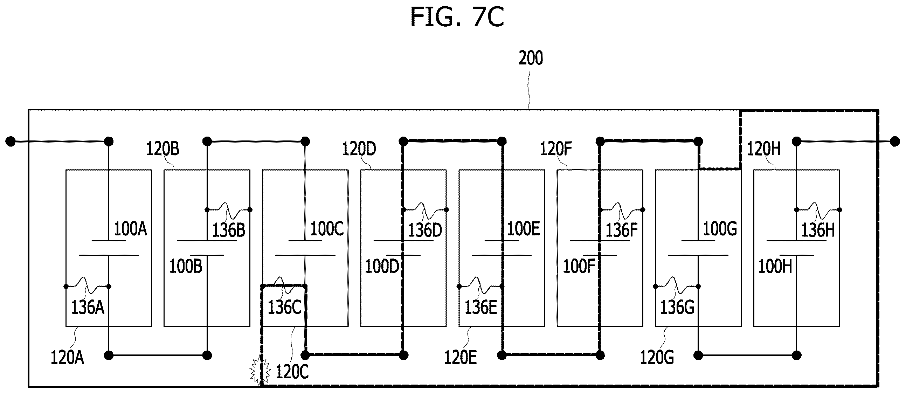

FIG. 7C is an equivalent circuit diagram illustrating a mechanism for preventing short circuit propagation in the battery pack when a short circuit occurs between a battery case and a pack housing. FIG. 7C is a situation where the case 120C of the third battery 100C and the case 120G of the seventh battery 100G are short-circuited with the pack housing 200. Referring to FIG. 7C, when the cases 120C and 120G of each of the third battery 100C and the seventh battery 100G are short-circuited with the pack housing 200, an overcurrent (indicated by the dashed line) flows through the case 120C of the third battery 100C and the pack housing 200 and the case 120G of the seventh battery 100G and the pack housing 200. As a result, the overcurrent flows through the wiring member 136C of the third battery 100C and the wiring member 136G of the seventh battery 100G, and at least one of the wiring members 136C and 136G may be disconnected to block the overcurrent flowing through the cases 120C and 120G and the pack housing 200. Therefore, it is possible to prevent or suppress the short circuit event from spreading into the other batteries 100A, 100B, and 100E to 100H in the battery pack.

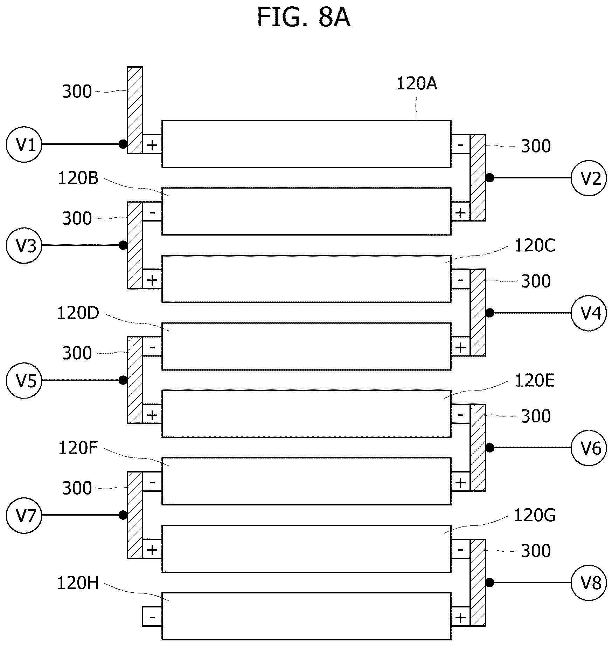

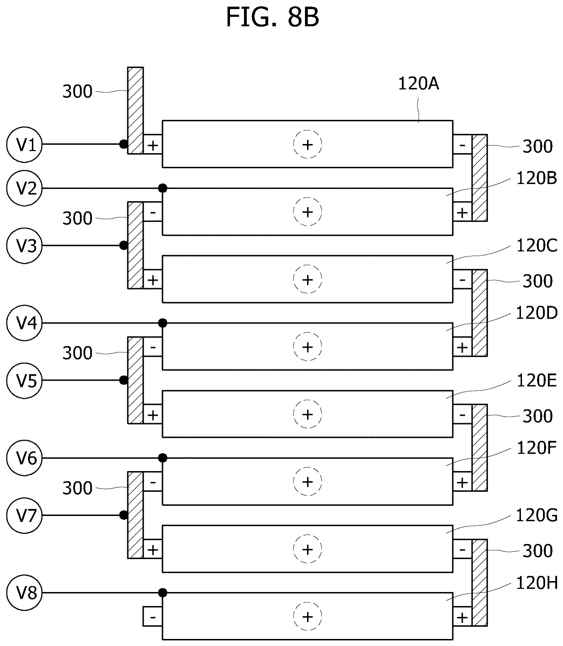

FIGS. 8A and 8B are diagrams schematically illustrating a configuration for measuring a voltage in battery packs, wherein FIG. 8A is a battery pack including the conventional battery and FIG. 8B is a battery pack including the battery according to an embodiment of the present disclosure. Here, the battery packs of FIGS. 8A and 8B are battery packs having the configuration illustrated in FIG. 1, and each battery is connected in series through the busbar 300.

Referring to FIG. 8A, with the battery pack including the conventional battery, it is common to measure the voltage through a busbar connecting adjacent batteries. In this case, measuring points for measuring the voltage, i.e., contact portions V1 to V8 electrically connected to the BMS, need to be divided and disposed on opposite sides of the battery pack. As a result, when a member including a circuit for measuring the voltage of the BMS, that is, a circuit for connecting the BMS and the contact portions V1 to V8, is installed in the battery pack, the design requires a complicated installation structure.

Referring to FIG. 8B, with the battery pack including the battery according to an embodiment of the present disclosure, the positive electrode of the battery is electrically connected with the case, so that the measuring points for measuring the voltage, that is, the contact portions V1 to V8 electrically connected with the BMS, may all be disposed on the same side of the battery pack. As a result, when a member including a circuit for measuring a voltage of the BMS, that is, a circuit for connecting the BMS and the contact portions V1 to V8, is installed in the battery pack, a simple installation structure may be used.

According to an embodiment of the present disclosure, an insulating member is interposed between a battery case and an electrode terminal and the battery case and the electrode terminal are electrically connected to each other through a wiring member, thereby preventing corrosion of the case. In addition, because the wiring member is a short-circuit propagation prevention member, even when a high current flows through any battery of a battery pack, the wiring member can effectively suppress or prevent the short circuit from spreading to throughout the battery pack. Additionally, a battery management device with a simple structural configuration can measure the electrical characteristics of the battery by directly connecting all or part of a plurality of batteries constituting the battery pack to the case.

However, the effects obtained through the present disclosure are not limited to the above-described effects, and other technical effects that are not mentioned will be clearly understood by those skilled in the art from the description herein.

Although the present invention has been described with reference to the embodiments shown in the drawings, which are merely examples, those with ordinary skill in the art will understand that various modifications and equivalent other embodiments are possible, provided that they fall within the scope of the claims.

## Claims

1. A cap assembly for a battery, the cap assembly comprising:
a cap plate configured to cover an opening in a case of the battery that accommodates an electrode assembly;
a terminal extending through the cap plate, a first end portion of the terminal being configured to be electrically connected to an electrode of the electrode assembly, and a second end portion of the terminal being configured to protrude to outside of the case;
an insulating member at least a portion of which is disposed between the cap plate and the terminal to electrically insulate the cap plate and the terminal; and
a wiring member electrically connecting the cap plate and the terminal.

2. The cap assembly of claim 1, wherein the wiring member is a short-circuit propagation prevention member, with a first end portion of the wiring member being coupled to the cap plate and a second end portion of is the wiring member being coupled to the terminal.

3. The cap assembly of claim 2, wherein the wiring member is a fuse component.

4. The cap assembly of claim 2 or claim 3, wherein the wiring member is bonded to a surface of the insulating member.

5. The cap assembly of any of claims 2 to 4, wherein the insulating member and the wiring member are made by an insert injection method.

6. The cap assembly of any of claims 2 to 4, wherein the insulating member and the wiring member are made by a laser direct structuring method.

7. The cap assembly of any of claims 2 to 4, wherein the wiring member is made using a conductive adhesive applied to the insulating member.

8. The cap assembly of any preceding claim, wherein the terminal is configured to be connected to a positive electrode of the electrode assembly.

9. A battery comprising:
a case including an opening;
an electrode assembly accommodated in the case; and
a cap assembly according to any preceding claim closing the opening of the case,
wherein
the cap plate is coupled to the case to cover the opening of the case,
the first end portion of the terminal is electrically connected to an electrode of the electrode assembly, and
the second end portion of the terminal protrudes outside of the case.

10. The battery of claim 9, wherein the terminal is connected to a positive electrode of the electrode assembly.

11. A battery pack comprising:
a plurality of batteries in accordance with claim 9 or claim 10, spaced apart from each other and arranged in at least one direction;
a busbar electrically connecting the batteries; and
a housing accommodating the batteries and the bus bar therein.

12. The battery pack of claim 11, including a partition wall member disposed between adjacent batteries among the plurality of batteries to electrically insulate the adjacent batteries from each other.

13. The battery pack of claim 11 or claim 12, including a battery management device configured to detect a state of each of the batteries, and the battery management device being electrically connected to the case of at least one of the plurality of batteries.
